# EUROPÄISCHE PATENTSCHRIFT

(11) **EP 2 665 991 B1**
(45) Veröffentlichungstag und Bekanntmachung des Hinweises auf die Patenterteilung: **29.10.2014**
(21) Anmeldenummer: 12719248.2
(22) Anmeldetag: 18.01.2012
(51) Int. Cl.: G01D 11/24

(54) **SENSOR-BAUGRUPPE**
SENSOR ASSEMBLY
MODULE DE DÉTECTION

(30) Priorität: 22.01.2011 DE 102011009156
(43) Veröffentlichungstag der Anmeldung: 27.11.2013
(73) Patentinhaber: Conti Temic Microelectronic GmbH, 90411 Nürnberg (DE)
(72) Erfinder: WENK, Alexander, 91595 Burgoberbach (DE); KEUTEN, Matthias, 90403 Nürnberg (DE); TRENNER, Uwe, 90475 Nürnberg (DE); KARRER, Helmut, 90762 Fürth (DE); HENNIGER, Jürgen, 91056 Erlangen-Dechsendorf (DE); WIECZOREK, Matthias, 91233 Neunkirchen am Sand (DE)
(74) Vertreter: Bonn, Roman Klemens
(86) Internationale Anmeldenummer: PCT/DE2012/000040
(87) Internationale Veröffentlichungsnummer: WO 2012/097800

(56) Entgegenhaltungen:
- DE-A1- 3 205 067
- DE-A1- 4 113 784
- DE-A1-102004 041 591
- DE-A1-102007 001 855
- DE-C1- 19 520 010
- US-A- 4 595 897

## Beschreibung

Die Erfindung betrifft eine Sensor-Baugruppe mit einer Trägerplatte und einem Sensorgehäuse, in dem mindestens ein Sensorelement untergebracht ist.

Bei einer bekannten Sensor-Baugruppe ist das Sensorgehäuse mit der Trägerplatte verschraubt.

Es ist eine Aufgabe der vorliegenden Erfindung, eine Sensor-Baugruppe der eingangs genannten Art derart weiterzuentwickeln, dass die Schraubverbindung sicher gestaltet ist.

Diese Aufgabe ist erfindungsgemäß gelöst durch eine Sensor-Baugruppe mit den im Anspruch 1 angegebenen Merkmalen.

Erfindungsgemäß wurde erkannt, dass ein Schraubkanal, der im Sensorgehäuse direkt durch das Kunststoff-Gehäusematerial vorgegeben ist, Probleme vermeidet, die beim bekannten Stand der Technik dadurch entstehen, dass der Schraubkanal einer separaten, mit dem Sensorgehäuse verbundenen Gewindebuchse ausgeführt ist. Das erfindungsgemäße Vorgeben des Schraubkanals direkt im Gehäusematerial ermöglicht zudem, eine Elastizität und/oder Plastizität des Gehäusematerials zur Sicherung der Schraubverbindung zu nutzen. Bei der Fertigung des Sensorgehäuses entfällt ein Fertigungsschritt, der mit dem Verbinden der Gewindebuchse mit dem Sensorgehäuse verbunden ist, z. B. das Einlegen einer Gewindebuchse in ein Spritzgusswerkzeug, mit dem das Sensorgehäuse hergestellt wird. Die Schraubverbindung kann so gestaltet sein, dass sie auch bei Temperaturschwankungen oder in einer Vibrationen ausgesetzten Umgebung das Sensorgehäuse sicher mit der Trägerplatte verbindet. Die Schraubverbindung kann also temperaturwechselfest und/oder vibrationsfest ausgeführt sein. Durch den Wegfall einer separaten Gewindebuchse wird zudem im Bereich der Schraubverbindung Bauraum eingespart.

Eine Gestaltung der Schraube und/oder des Sensorgehäuses nach Anspruch 2 erhöht die Sicherung der Schraubverbindung zusätzlich. Die Schraube oder das Sensorgehäuse können auch so gestaltet sein, dass sie sich unter Einwirkung der Schraubkraft plastisch verformen.

Eine Hohlraumgestaltung nach Anspruch 3 führt zur Möglichkeit, eine Vorspannung der Schraubverbindung vorzugeben, was die Schraubverbindung sichert.

Deformationsabschnitte nach den Ansprüchen 4 und 5 haben sich zur Gestaltung einer die Schraubverbindung sichernden Vorspannung als besonders geeignet herausgestellt. Die Deformationsabschnitte können durch gezielte Schwächungen der Gehäusestruktur realisiert sein. Derartige Schwächungen können auch durch Ausnehmungen, insbesondere durch randseitige Ausnehmungen, im Sensorgehäuse realisiert sein.

Entsprechende Vorteile hat eine elastisch deformierbare Trägerplatte nach Anspruch 6.

Ausführungsbeispiele der Erfindung werden nachfolgend anhand der Zeichnungen näher erläutert. In dieser zeigen:
- Fig. 1: in einer Seitenansicht eine Sensor-Baugruppe mit einer metallischen Trägerplatte und einem Sensorgehäuse aus Kunststoff;
- Fig. 2: in einem vertikalen Längsschnitt einen Fußbereich der Sensor-Baugruppe auf Höhe einer Schraubverbindung des Sensorgehäuses mit der Trägerplatte;
- Fig. 3: schematisch eine weitere Ausführung eines Fußbereichs der Sensor-Baugruppe mit einer weiteren Ausführung einer Schraubverbindung, ebenfalls im axialen Längsschnitt mit einer leicht angezogenen Schraube; und
- Fig. 4: die Schraubverbindung nach Figur 3 mit fester angezogener Schraube.

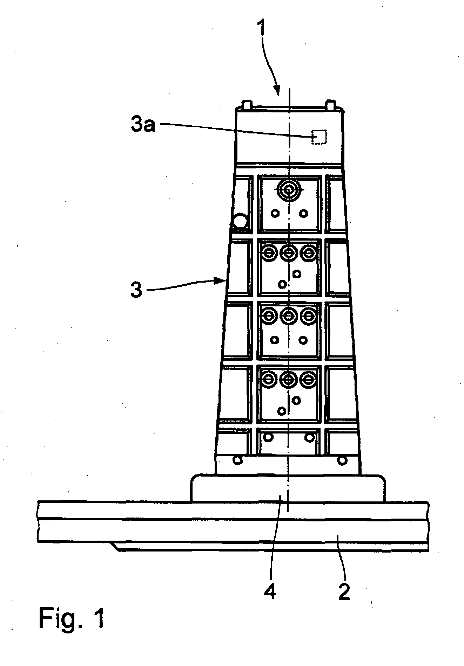

Fig. 1 zeigt eine Sensor-Baugruppe 1 mit einer gebrochen dargestellten, metallischen Trägerplatte 2 und einem Sensorgehäuse 3 aus Kunststoff, in dem ein schematisch dargestelltes Sensorelement 3a untergebracht ist. Das Sensorgehäuse 3 wird auch als Kunststoff-Dom bezeichnet. Die Sensor-Baugruppe 1 kann in einem Getriebe oder in einem Motorraum eines Kraftfahrzeugs verbaut sein. Das Sensorelement 3a der Sensor-Baugruppe 1 kann zur Ermittlung von Drehzahl, Weg oder anderen Messgrößen beispielsweise in Steuergeräten genutzt werden.

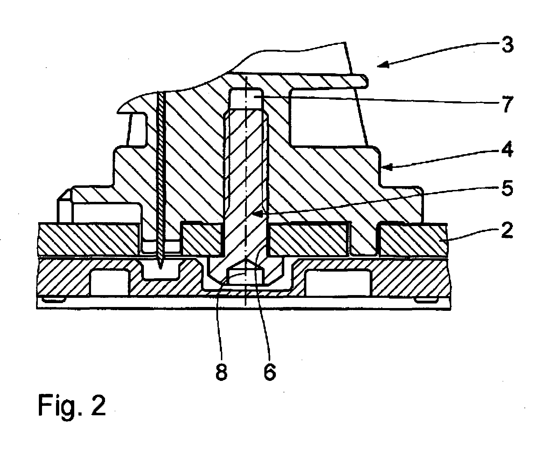

Fig. 2 zeigt Details eines Fußbereichs 4 des Sensorgehäuses 3. Das Sensorgehäuse 3 ist mit der Trägerplatte 2 mittels mindestens einer Schraube 5 verbunden. Letztere ist durch eine Durchgangsöffnung 6 der Trägerplatte 2 hindurchgeführt. Ein Schraubkanal 7 im Sensorgehäuse 3 ist durch das Kunststoff-Gehäusematerial vorgegeben. Die Schraube 5 hat ein selbstschneidendes Gewinde. Bei der Schraube 5 handelt es sich um eine selbstfurchende Schraube. Die Schraube 5 ist derart gestaltet, dass sie sich unter Einwirkung einer längs einer Schraubachse 8 wirkenden Schraubkraft elastisch verformt. Auch eine plastische Verformung der Schraube 5 unter der Einwirkung der beim Einschrauben, insbesondere beim Einschneiden des Gewindes in das Gehäusematerial des Sensorgehäuses 3 vorliegenden Kräfte, ist möglich. Dies kann eine Verzahnungswirkung zwischen dem Außengewinde der Schraube 5 und dem Gehäusematerial erhöhen.

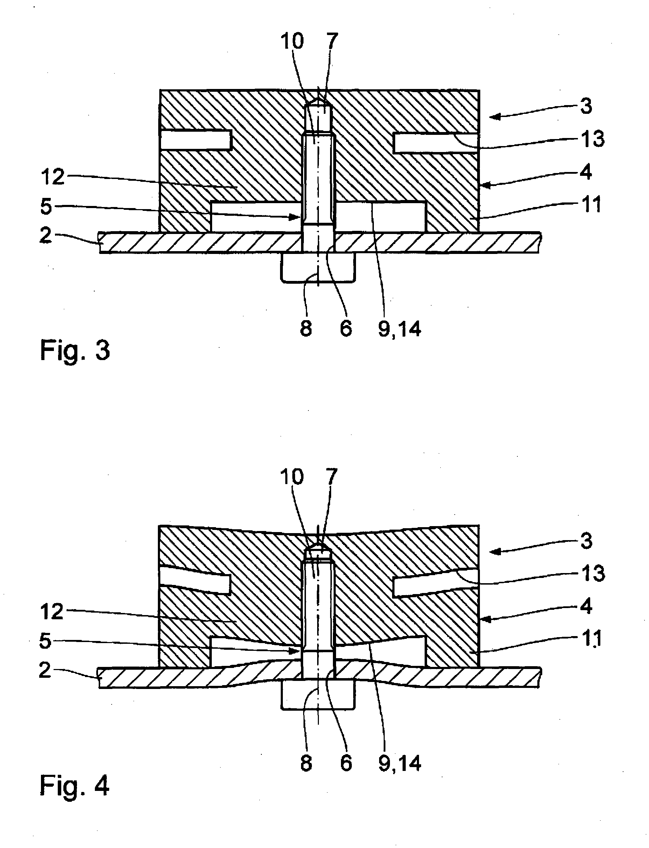

Fig. 3 und 4 zeigen eine weitere Ausführung einer Schraubverbindung zwischen einem Fußbereich 4 eines Sensorgehäuses 3 und einer Trägerplatte 2. Komponenten, die denjenigen einsprechen, die vorstehend in Zusammenhang mit den Fig. 1 und 2 bereits erläutert wurden, tragen die gleichen Bezugsziffem und werden nicht nochmals im Einzelnen diskutiert. Zwischen der Durchgangsöffnung 6 und dem Schraubkanal 7 ist ein Hohlraum 9 angeordnet. Dieser umgibt einen Schraubkörper 10 der Schraube 5, so dass sich das Sensorgehäuse 3 beabstandet zum Schraubkanal 7 über einen Ringabschnitt 11 an der Trägerplatte 2 abstützt.

Den Hohlraum 9 begrenzende Deformationsabschnitte des Sensorgehäuses 3 sind so gestaltet, dass sie sich unter Einwirkung einer längs der Schraubachse 8 wirkenden Schraubkraft elastisch verformen. Dieses Deformationsabschnitte sind ein Sensorgehäuse 3 nach den Fig. 3 und 4 durch gezielte Schwächungen der Gehäusestruktur realisiert, nämlich durch eine sich an den Ringabschnitt 11 einstückig anformende Ringrippe 12. Gegenüber dem Holraum 9 ist die Ringrippe 12 begrenzt durch eine Ausnehmung in Gestalt einer Umfangsnut 13 im Fußbereich 4 des Sensorgehäuses 3. Auch eine andere Gestaltung der Deformationsabschnitte in Form von Federn und/oder Rippen und/oder Ausnehmungen, die gewährleistet, dass sich das Sensorgehäuse 3 unter Einwirkung der Schraubkraft elastisch verformt, ist möglich. Die Deformationsabschnitte können durch gezielte Schwächungen der Gehäusestruktur realisiert sein.

Fig. 4 zeigt die Schraubverbindung nach Fig. 3 bei fest angezogener Schraube 5. Die Deformationsabschnitte des Sensorgehäuses, als die Ringrippe 12, die Umfangsnut 13 und die hieran angrenzenden Gehäuseabschnitte des Sensorgehäuses 3 haben sich unter Einwirkung der Schraubkraft elastisch verformt. Hierdurch hat sich eine der Trägerplatte 2 zugewandte Holraumwand 14 in einem Ringabschnitt benachbart zum Schraubkanal 7 auf die Trägerplatte 2 zu verlagert.

Auch die Trägerplatte 2 ist bei der Ausführung nach den Fig. 3 und 4 so gestaltet, dass sie sich unter Einwirkung der Schraubkraft elastisch verformt, wie ein Vergleich der Fig. 3 und 4 zeigt. Bei angezogener Schraube 5 hat sich die Trägerplatte 2 in einem dem Schraubkörper 10 benachbarten Ringabschnitt auf die Holraumwand 14 zu verlagert. Auch bei angezogener Schraube 5 berühren sich die Holraumwand 14 und die Trägerplatte 2 nicht, so dass zwischen diesen ein Abstand verbleibt.

## Patentansprüche

1. S ensor-B augruppe (1),
- mit einer metallischen Trägerplatte (2),
- mit einem Sensorgehäuse (3) aus Kunststoff, in dem mindestens ein Sensorelement untergebracht ist,
- wobei das Sensorgehäuse (3) mit der Trägerplatte (2) mittels mindestens einer Schraube (5) verbunden ist, die durch eine Durchgangsöffnung (6) der Trägerplatte (2) geführt ist,
- wobei ein Schraubkanal (7) im Sensorgehäuse (3) durch das Gehäusematerial vorgegeben und als Schraubgewinde ausgebildet ist.

2. Sensor-Baugruppe nach Anspruch 1, **dadurch gekennzeichnet, dass** die Schraube (5) und/oder das Sensorgehäuse (3) derart gestaltet ist, dass sie sich unter Einwirkung einer längs einer Schraubachse (8) wirkenden Schraubkraft elastisch verformt.

3. Sensor-Baugruppe nach Anspruch 1 oder 2, **dadurch gekennzeichnet, dass** zwischen der Durchgangsöffnung (6) und dem Schraubkanal (7) ein Hohlraum (9) derart angeordnet ist, dass sich das Sensorgehäuse (3) beabstandet zum Schraubkanal (7) an der Trägerplatte (2) abstützt.

4. Sensor-Baugruppe nach Anspruch 3, **dadurch gekennzeichnet, dass** den Hohlraum (9) begrenzende Deformationsabschnitte (12, 13) des Sensorgehäuses (3) derart gestaltet sind, dass sie sich unter Einwirkung der Schraubkraft elastisch verformen.

5. Sensor-Baugruppe nach Anspruch 4, **dadurch gekennzeichnet, dass** die Deformationsabschnitte als Federn oder als Rippen gestaltet sind.

6. Sensor-Baugruppe nach einem der Ansprüche 1 bis 5, **dadurch gekennzeichnet, dass** die Trägerplatte (2) derart gestaltet ist, dass sie sich unter Einwirkung einer längs einer Schraubachse (8) wirkenden Schraubkraft elastisch verformt.

## Claims

1. Sensor assembly (1),
- comprising a metallic carrier plate (2),
- comprising a sensor housing (3) made of plastic in which at least one sensor element is accommodated,
- wherein the sensor housing (3) is connected to the carrier plate (2) by means of at least one screw (5) which is guided through a through-opening (6) in the carrier plate (2),
- wherein a screwing channel (7) in the sensor housing (3) is predefined by the housing material and is designed as a screw thread.

2. Sensor assembly according to Claim 1, **characterized in that** the screw (5) and/or the sensor housing (3) are or is designed in such a way that it or they are elastically deformed under the action of a screwing force acting along a screwing axis (8).

3. Sensor assembly according to Claim 1 or 2, **characterized in that** a cavity (9) is arranged between the through-opening (6) and the screwing channel (7) in such a way that the sensor housing (3) is supported on the carrier plate (2) at a distance from the screwing channel (7).

4. Sensor assembly according to Claim 3, **characterized in that** deformation portions (12, 13) of the sensor housing (3) that delimit the cavity (9) are designed in such a way that they are elastically deformed under the action of the screwing force.

5. Sensor assembly according to Claim 4, **characterized in that** the deformation portions are designed as springs or as ribs.

6. Sensor assembly according to one of Claims 1 to 5, **characterized in that** the carrier plate (2) is designed in such a way that it is elastically deformed under the action of a screwing force acting along a screwing axis (8).

## Revendications

1. Module de capteurs (1),
- avec une plaque de support métallique (2),
- avec un boîtier de capteur (3) en matière plastique, dans lequel est logé au moins un élément de capteur,
- le boîtier de capteur (3) étant relié à la plaque de support (2) à l'aide d'au moins une vis (5), qui est guidée à travers une ouverture de passage (6) de la plaque de support (2),
- un canal de vis (7) étant réalisé dans le boîtier de capteur (3) à travers du matériau du boîtier et étant conçu en tant que filetage.

2. Module de capteurs selon la revendication 1, **caractérisé en ce que** la vis (5) et/ou le boîtier de capteur (3) est conçu de façon à ce qu'elle est déformée de manière élastique sous l'effet d'une force de vissage exercée le long d'un axe de vissage (8).

3. Module de capteurs selon la revendication 1 ou 2, **caractérisé en ce que**, entre l'ouverture de passage (6) et le canal de vis (7), est disposé un espace vide (9), de façon à ce que le boîtier de capteur (3) s'appuie contre la plaque de support (2) de façon espacée du canal de vis (7).

4. Module de capteurs selon la revendication 3, **caractérisé en ce que** des portions déformables (12, 13) du boîtier de capteur (3), délimitant l'espace vide (9), sont conçues de façon à ce qu'elles se déforment de manière élastique sous l'action de la force de vissage.

5. Module de capteurs selon la revendication 4, **caractérisé en ce que** les portions déformables sont conçues comme des ressorts ou comme des nervures.

6. Module de capteurs selon l'une des revendications 1 à 5, **caractérisé en ce que** la plaque de support (2) est conçue de façon à ce qu'elle se déforme de manière élastique sous l'action d'une force de vissage exercée le long d'un axe de vissage (8).
